# EUROPEAN PATENT APPLICATION

(11) **EP 4 717 607 A1**
(43) Date of publication of application: **01.04.2026**
(21) Application number: 25205783.1
(22) Date of filing: 30.09.2025
(51) Int. Cl.: B64D 41/00, B64C 27/473, B64C 11/00

(54) **RAM AIR TURBINE FIXED WITHIN AIRCRAFT**

(30) Priority: 30.09.2024 US 202418901937
(71) Applicant: Hamilton Sundstrand Corporation, Charlotte, NC 28217-4578 (US)
(72) Inventor: KILCHYK, Viktor, Lanccaster, NY (US); PAL, Debabrata, Hoffman Estates, IL (US)
(74) Representative: Dehns

(57) **Abstract**

An aircraft system, having: a section of a fuselage (2) surrounding an interior portion of an aircraft; an aperture (130) defined along the section of the fuselage (2); an inlet scoop at the aperture (130); an inlet channel (140) extending away from the inlet scoop to the interior portion of the aircraft; and a Ram Air Turbine (RAT) connected to the inlet channel, wherein the RAT is fixed within the interior portion of the aircraft.

## Description

### BACKGROUND

The embodiments are directed to Ram Air Turbines (RAT) and more specifically to a RAT fixed within an aircraft.

A RAT may be deployed outside of aircraft. Such a configuration may require a mechanically complex, heavy and space occupying deployment and stowing system. A deployed RAT may experience lower efficiency due to aerodynamic losses, turbulence, and tip vortices. They may generate noise pollution and be vulnerable to damage from environmental debris.

### BRIEF SUMMARY

Disclosed is an aircraft system, including: a section of a fuselage surrounding an interior portion of an aircraft; an aperture defined along the section of the fuselage; an inlet scoop at the aperture; an inlet channel extending away from the inlet scoop to the interior portion of the aircraft; and a Ram Air Turbine (RAT) connected to the inlet channel, wherein the RAT is fixed within the interior portion of the aircraft.

In addition to one or more of the above disclosed aspects of the system, the RAT is a rim driven turbine.

In addition to one or more of the above disclosed aspects of the system, the RAT includes a rotor defining blades, and a duct surrounding the rotor defining a stator.

In addition to one or more of the above disclosed aspects of the system, the duct includes copper windings.

In addition to one or more of the above disclosed aspects of the system, the blades define blade tips, and one of: a shroud is integral with the blade tips, and permanent magnets are mounted to the shroud; or the permanent magnets are integrated into the blade tips.

In addition to one or more of the above disclosed aspects of the system, the RAT is configured as an induction motor-generator.

In addition to one or more of the above disclosed aspects of the system, the blades define blade tips, and one of: a shroud is integral with the blade tips, and the shroud includes a conductor; or induction bars integrated into the blade tips.

In addition to one or more of the above disclosed aspects of the system, the RAT includes a center shaft that is coupled to a motor-generator.

In addition to one or more of the above disclosed aspects of the system, the system includes a governor that controls a rotational speed of the RAT.

Disclosed is another embodiment of aircraft system, including: a fuselage surrounding an interior portion of an aircraft; wherein the fuselage defines a forward portion and an aft portion, wherein the fuselage defines stagnation zones including a first stagnation zone in the forward portion and a second stagnation zone in the aft portion; a first aperture defined at the first stagnation zone and a second aperture defined at the second stagnation zone; an inlet scoop at the first aperture; an exhaust vent at the second aperture; an inlet channel extending away from the inlet scoop to the interior portion of the aircraft; a Ram Air Turbine (RAT) connected to the inlet channel, wherein the RAT is fixed within the interior portion of the aircraft; and an outlet channel extending from the RAT to the exhaust vent.

In addition to one or more of the above disclosed aspects of the another embodiment of the system, the RAT is a rim driven turbine.

In addition to one or more of the above disclosed aspects of the another embodiment of the system, the RAT includes a rotor defining blades and a duct surrounding the rotor defining a stator.

In addition to one or more of the above disclosed aspects of the another embodiment of the system, the duct includes copper windings.

In addition to one or more of the above disclosed aspects of the another embodiment of the system, the blades define blade tips, and one of: a shroud is integral with the blade tips, and permanent magnets are mounted to the shroud; or the permanent magnets are integrated into the blade tips.

In addition to one or more of the above disclosed aspects of the another embodiment of the system, the RAT is configured as an induction motor-generator.

In addition to one or more of the above disclosed aspects of the another embodiment of the system, the blades define blade tips, and one of: a shroud is integral with the blade tips, and the shroud includes a conductor; or induction bars integrated into the blade tips.

In addition to one or more of the above disclosed aspects of the another embodiment of the system, the RAT includes a center shaft that is coupled to a motor-generator.

In addition to one or more of the above disclosed aspects of the another embodiment of the system, the system includes a governor that controls a rotational speed of the RAT.

### BRIEF DESCRIPTION OF THE DRAWINGS

The following descriptions should not be considered limiting in any way. With reference to the accompanying drawings, like elements are numbered alike:
FIG. 1 shows an aircraft that may utilize aspects of the disclosed embodiments;
FIG. 2 shows a RAT fixed within a section of the aircraft;
FIG. 3 shows details of the RAT configured as a permanent magnet motor-generator;
FIG. 4 shows details of the RAT configured as an induction motor-generator; and
FIG. 5 shows the RAT connected between forward and aft stagnation zones along the fuselage of the aircraft.

### DETAILED DESCRIPTION

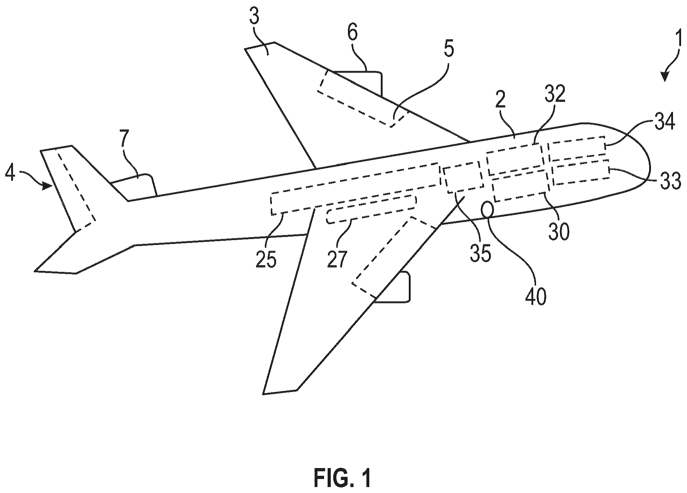

FIG. 1 shows an aircraft 1 having a fuselage 2 with a wing 3 and tail assembly 4, which may have control surfaces 5. The wing 3 may include an engine 6, such as a gas turbine engine, and an auxiliary power unit 7 may be disposed at the tail assembly 4. The aircraft 1 may have a cabin 25, a cargo bay 27, an environmental control system (ECS) 30 for conditioning the cabin 25 and/or cargo bay 27. The ECS 30 may include a vapor compression system (VCS) 32 that cools air directed to, e.g., the cargo bay 27 and provides refrigeration to one or more systems 35 of the aircraft 1, and an air cycle machine (ACM) 33 that cools air directed to e.g., the cabin 25. A RAM air inlet 40 may scoop air for the ECS 30, or the ECS 30 may receive air recirculated from, e.g., a cabin air compressor (CAC) 34.

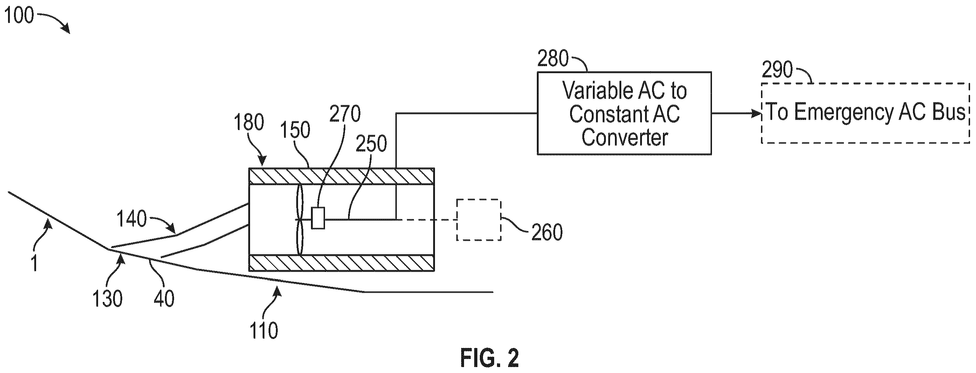

Turning to FIG. 2, a disclosed system 100 includes a section 110 of the fuselage 2 surrounding an interior portion 120 of the aircraft 1. An inlet aperture 130 is defined along the section 110 of the fuselage 2. An inlet scoop 40, e.g., the RAM air inlet 40 (FIG. 1), is located the aperture 130. An inlet channel 140 extends away from the inlet scoop 40 to the interior portion 120 of the aircraft 1.

According to an embodiment, a Ram Air Turbine (RAT) 150 is connected to the inlet channel 140. The RAT 150 is fixed within the interior portion 120 of the aircraft 1. In one embodiment, the RAT 150 is a rim driven turbine.

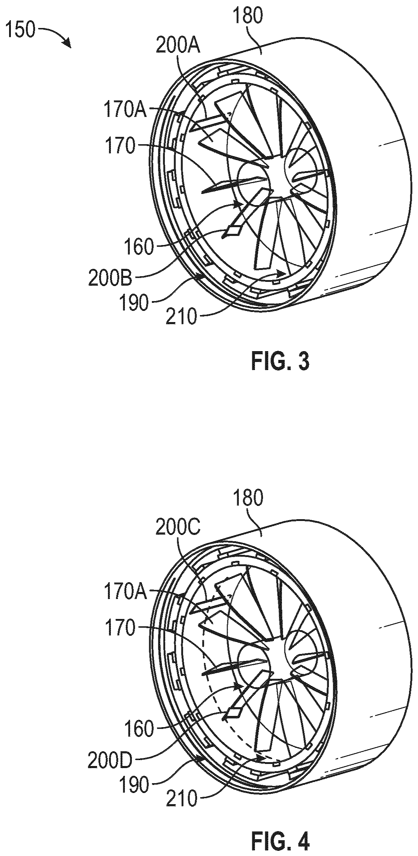

As shown in FIG. 3, in one embodiment, the RAT 150 is configured as a permanent magnet motor-generator. The RAT 150 includes a rotor 160 defining blades 170 and a duct 180 surrounding the rotor 160. The duct 180 includes copper windings 190 and defines a stator. Permanent magnets 200A may be seated in a shroud 210 that is integral with the blade tips 170A. Alternatively, the permanent magnets 200B are integral with the blade tips 170A.

As shown in FIG. 4, in one embodiment, the RAT 150 is configured as an induction motor-generator. The RAT 150 includes a rotor 160 defining blades 170 and a duct 180 surrounding the rotor 160. The duct 180 includes copper windings 190 and defines a stator. The shroud 210 is integral with the blade tips 170A, and the shroud 210 includes a conductor 200C. Alternatively, induction bars 200D are integral with the blade tips 170A. In one embodiment, the RAT 150 includes a center shaft 250 that is coupled to a motor-generator 260. In one embodiment, a governor 270 controls a rotational speed of the RAT 150. Current generated by the RAT 150 maybe be received by a variable AC to constant AC converter 280 and directed to an emergency AC bus 290 for the aircraft 1.

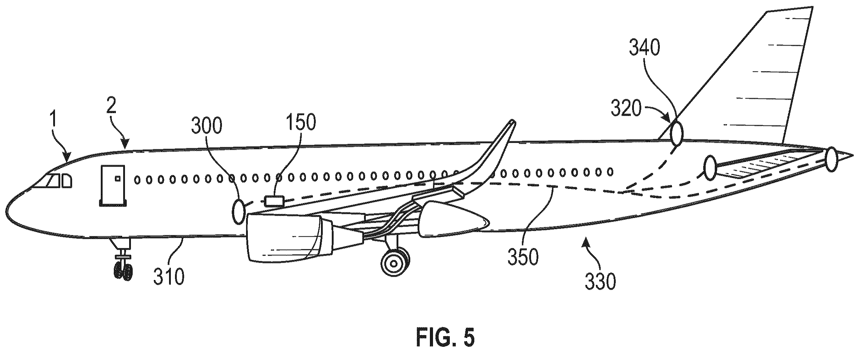

Turning to FIG. 5 in one embodiment the inlet aperture 130 is located a forward (first) stagnation zone 300 of the fuselage 2 of the aircraft 1, which may be a forward portion 310 of the fuselage 2. An aft (second) stagnation zone 320 may be located at an aft portion 330 of the fuselage 2. A second aperture 340 may be defined at the aft stagnation zone 320. An outlet channel 350 may be connected between the RAT 150 and the second aperture 340. Alternatively, there may be a plurality of aft stagnation zones 320 and the outlet channel 350 may branch to two or more of the aft stagnation zones 320. This configuration enables, e.g., the use of the RAT 150 for energy recovery during a decent phase of flight.

The embodiments provide an internally fixed RAT 150 that will avoid issues with a deployable RAT, such a complex, heavy and space occupying mechanism, exterior noise generation, aerodynamic inefficiencies, and susceptibility to damage from environmental debris. The RAT may be used for energy recovery during a decent, e.g., with a location of the RAT the inlet and outlet being selected to maximize performance near the fuselage stagnation zones.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An aircraft system, comprising:
a section of a fuselage (2) surrounding an interior portion of an aircraft;
an aperture (130) defined along the section of the fuselage (2);
an inlet scoop at the aperture (130);
an inlet channel (140) extending away from the inlet scoop to the interior portion of the aircraft; and
a Ram Air Turbine, RAT, connected to the inlet channel (140), wherein the RAT is fixed within the interior portion of the aircraft.

2. The system of claim 1, wherein the RAT is a rim driven turbine.

3. The system of claim 2, wherein the RAT includes a rotor (160) defining blades, and a duct (180) surrounding the rotor defining a stator.

4. The system of claim 3, wherein the duct includes copper windings.

5. The system of claim 4, wherein
the blades define blade tips, and one of:
a shroud is integral with the blade tips, and permanent magnets are mounted to the shroud; or
the permanent magnets are integrated into the blade tips.

6. The system of claim 4, wherein the RAT is configured as an induction motor-generator.

7. An aircraft system, comprising:
a fuselage (2) surrounding an interior portion of an aircraft;
wherein the fuselage (2) defines a forward portion and an aft portion, wherein the fuselage (2) defines stagnation zones including a first stagnation zone in the forward portion and a second stagnation zone in the aft portion;
a first aperture (130) defined at the first stagnation zone and a second aperture (340) defined at the second stagnation zone;
an inlet scoop at the first aperture (130);
an exhaust vent at the second aperture (340)_;
an inlet channel extending away from the inlet scoop to the interior portion of the aircraft;
a Ram Air Turbine, RAT, connected to the inlet channel, wherein the RAT is fixed within the interior portion of the aircraft; and
an outlet channel extending from the RAT to the exhaust vent.

8. The system of claim 7, wherein the RAT is a rim driven turbine.

9. The system of claim 8, wherein the RAT includes a rotor defining blades and a duct surrounding the rotor defining a stator.

10. The system of claim 9, wherein the duct includes copper windings.

11. The system of claim 10, wherein
the blades define blade tips, and one of:
a shroud is integral with the blade tips, and permanent magnets are mounted to the shroud; or
the permanent magnets are integrated into the blade tips.

12. The system of claim 10, wherein the RAT is configured as an induction motor-generator.

13. The system of claim 6 or 12, wherein
the blades define blade tips, and one of:
a shroud is integral with the blade tips, and the shroud includes a conductor; or
induction bars integrated into the blade tips.

14. The system of any preceding claim, wherein the RAT includes a center shaft that is coupled to a motor-generator.

15. The system of any preceding claim, including a governor that controls a rotational speed of the RAT.
